# EUROPÄISCHE PATENTSCHRIFT

(11) **EP 2 464 704 B1**
(45) Veröffentlichungstag und Bekanntmachung des Hinweises auf die Patenterteilung: **03.05.2017**
(21) Anmeldenummer: 10737340.9
(22) Anmeldetag: 03.08.2010
(51) Int. Cl.: C09J 11/02, C09J 127/04, C09J 123/28, C09J 111/02

(54) **VERFAHREN ZUR KOHLENDIOXIDEINLEITUNG**
METHOD FOR INTRODUCING CARBON DIOXIDE
PROCÉDÉ D'INTRODUCTION DE DIOXYDE DE CARBONE

(30) Priorität: 14.08.2009 DE 102009028541
(43) Veröffentlichungstag der Anmeldung: 20.06.2012
(73) Patentinhaber: Henkel AG & Co. KGaA, 40589 Düsseldorf (DE)
(72) Erfinder: LORENZ, Jürgen, 73441 Bopfingen (DE); KÖNIG, Elisabeth, 73466 Lauchheim (DE); KIENLE, Jörg, 86742 Fremdingen (DE); LAUTER, Rudolf, 86742 Fremdingen (DE)
(86) Internationale Anmeldenummer: PCT/EP2010/061246
(87) Internationale Veröffentlichungsnummer: WO 2011/018386

(56) Entgegenhaltungen:
- WO-A1-98/53019
- WO-A1-2010/025862

## Beschreibung

Die Erfindung betrifft ein Verfahren, Kohlendioxid in eine Klebstoffdispersion auf Basis von chlorierten Polyolefinen zu dosieren. Weiterhin betrifft die Erfindung eine wasserbasierte Klebstoffdispersion, die mit Kohlendioxid zu einem applikationsfertigen Klebstoff umgesetzt wird.

Lösemittelhaltige Klebstoffe auf Chloropren-Basis sind bekannt. Dabei wird der Klebstoff als Lösung oder Dispersion aufgetragen, danach muss das Lösemittel verdunsten. Diese Anwendungsart ist zeitaufwändig und entspricht durch den Lösemittelgehalt nicht den heutigen Umweltanforderungen. Wässrige Klebstoffe als Dispersion sind ebenfalls bekannt. Dabei werden unterschiedliche Mittel eingesetzt, den alkalischen pH-Wert einer Klebstoffdispersion einzustellen.

Die WO 01/77248 beschreibt eine wässrige Klebstoffdispersion, die einen kristallisierbaren Polyester, ein Polychloropren, ein Acrylatpolymer, ein weiteres thermoplastisches Harz sowie ausgewählte Stabilisatoren enthält. Als Stabilisator wird ein verzweigter Aminoalkohol beschrieben. Eine Änderung des pH-Werts durch Einleiten von CO₂ wird nicht beschrieben.

Die WO 98/53019 beschreibt wässrige Klebstoffe auf Polychloropren-Basis, die Borsäure enthalten. Dabei wird ein alkalischer pH-Wert eingestellt und der Klebstoff kann eingesetzt werden. Der pH wird durch Borsäure oder eine Aminosäure eingestellt. Eine Veränderung von der Applikation wird nicht beschrieben.

Die US 6087439 beschreibt wässrige Dispersionen aus Chlorbutadien-Polymeren, die zusammen mit aliphatischen Isocyanaten als Klebstoff eingesetzt werden können. Dabei wird nach dem Zumischen der Isocyanate CO₂ gebildet. Dieses führt zu einer Änderung des pH-Werts, dadurch wird dann das Bindemittel ausgefällt und vernetzt danach.

Die DE 10 2008 045 805 beschreibt wässrige Dispersionen aus Polychloropren. Diese sollen mit CO₂ im pH-Wert eingestellt werden. Dabei die Kohlensäure durch Schütteln oder Rühren eingetragen. Es wird ein Volumen bestimmt, eine genaue pH-Wert Messung wird nicht durchgeführt.

Beim Zusetzen von schwachen anorganischen oder organischen Säuren ergibt sich immer das Problem des homogenen Verteilens der Säure in der Dispersion. Das ist insbesondere bei höher viskosen Klebstoffen schwierig und führt zu ungleichmäßigen Produkten. Der Zusatz von Isocyanaten, bei dem auch eine pH-Änderung durch eine chemische Reaktion hervorgerufen wird, ist teuer und je nach ausgewähltem Isocyanat auch problematisch in Bezug auf Gesundheitsgefahren.

Es sind auch Verfahren beschrieben, durch Zusatz von CO₂ den pH einer Chloroprendispersion zu ändern, um diese danach zu applizieren. CO₂ ist leicht verfügbar und auch in die Flüssigphase einzuarbeiten. Dabei ergeben sich jedoch Probleme, reproduzierbare pH-Werte der unterschiedlichen Klebstoffdispersionen einzustellen. Da die Bindemittel, bzw. die Neutralisationsmittel häufig Chargenweise hergestellt werden, ist die Empfindlichkeit einer Dispersion gegenüber dem eingeleiteten CO₂ unterschiedlich. Der Übergang in die wässrige Phase ist häufig von den Verfahrensbedingungen abhängig. Die Klebstoffe zeigen ein schwankendes Neutralisationsverhalten, sodass die Menge des notwendigen CO₂ in Abhängigkeit von den Bestandteilen des Klebstoffs sich ändert. Dabei können auch Verunreinigungen einen Einfluss auf die notwendige CO₂ Menge zum Erreichen eines geeigneten pH-Werts haben. Solche unterschiedlichen Mengen führen jedoch den Anwender zu unterschiedlichen Eigenschaften der Klebstoffe, sie stören also einen standardisierten Verklebungsprozess.

Aus dem Stand der Technik ergibt sich die Aufgabe, ein Verfahren zum Einstellen eines pH-Werts einer wässrigen Klebstoffdispersion auf Basis von chlorierten Polyolefinen bereitzustellen, wobei CO₂ in die Dispersion eingearbeitet werden soll. Dabei soll die Menge des notwendigen gasförmigen CO₂ so kontrolliert werden, dass ein reproduzierbares Anwenden und Herstellen einer Klebstoffschicht möglich ist. Weiterhin soll ein wässriger Klebstoff auf Basis von chlorierten Polyolefinen bereitgestellt werden, der im alkalischen pH-Bereich stabil ist, durch Absenken des pH mit eingeleitetem CO₂ aber aus der Dispersion schnell eine Klebstoffschicht ausbilden kann.

Die Aufgabe wird gelöst durch ein Verfahren zum Herstellen einer Klebstoffschicht, wobei eine lagerstabile wässrige Klebstoffdispersion enthaltend chlorierte Polyolefine und weitere Zusatzstoffe mit einem pH von 10 bis 13 bereitgestellt wird, dieser Klebstoff durch Einleiten von CO₂ auf einen pH unterhalb 9,0 eingestellt wird, danach eine Klebstoffschicht aufgetragen wird, dadurch gekennzeichnet, dass die Menge des einzubringenden CO₂ durch kontinuierliches Messen des pH-Wertes der Dispersion bestimmt und geregelt wird, wobei das CO₂ so eingeleitet wird, dass der gewünschte pH in einer Mischzeit von 0,5 Minuten bis 20 Minuten eingestellt wird. Das erfindungsgemäße Verfahren ist für wässrige Klebstoffdispersionen geeignet, die als Hauptbindemittel chlorierte Polyolefine enthalten. Solche Dispersionen können zusätzlich weitere Polymere und Hilfsstoffe enthalten. Sie sind bevorzugt lösemittelfrei und weisen einen Feststoffgehalt von 35 bis 80 % auf. Diese sind im Allgemeinen in alkalischer Umgebung lagerstabil, können aber durch Absenken des pH-Werts in eine instabile Phase übergehen, aus sie dann als Klebstoff aufgetragen werden können. Weiterhin Gegenstand der Erfindung ist eine wässrige Klebstoffdispersion auf Basis von chlorierten Polyolefinen, die nach Aufnahme einer definierten Menge CO₂ einen applizierbaren Klebstoff ergibt, der eine lange Verarbeitungszeit aufweist.

Gegenstand der Erfindung ist ein Verfahren zum Herstellen von Klebstoffschichten. Dabei wird eine wässrige Dispersion eines erfindungsgemäß geeigneten Klebstoffs in lagerstabiler Form mit einem pH 10 bis 13 mit gasförmigem CO₂ versetzt und dieses untergemischt. Es ist bekannt, dass bei alkalischen Lösungen der pH-Wert durch Zugabe von CO₂ erniedrigt wird, d.h. das die Lösung sauerer wird. Es wird gemäß der erfindungsgemäßen Arbeitsweise die Klebstoffdispersion beim Einleiten des CO₂ homogenisiert. Nach der erfindungsgemäßen Arbeitsweise ist in der Dispersion eine pH-Messelektrode vorhanden. Es wird in kurzen Abständen oder kontinuierlich der pH-Wert der Dispersion gemessen während des Dosierens des CO₂. Die Menge des zugesetzten CO₂ wird so gewählt, dass der resultierende pH der Dispersion im Bereich zwischen 7,0 und 9,0 liegt. In diesem Bereich bilden sich Dispersionen aus, die noch verarbeitbar sind, unmittelbar nach dem Verarbeiten aber koagulieren und eine Klebstoffschicht ergeben.

Als Messwertgeber können die bekannten Messeinrichtungen zum Bestimmen des pH-Werts verwendet werden. Bevorzugt soll eine kontinuierliche Messung erfolgen. Beispielsweise kann eine Ein-Stab-Messkette eingesetzt werden. Solche Elektroden und Anzeigegeräte sind dem Fachmann bekannt.

Bei der erfindungsgemäßen Arbeitsweise ist es sicherzustellen, dass in dem Mischgefäß eine homogene Verteilung des eingeleiteten CO₂ entsteht. Eine Ausführungsform arbeitet derartig, dass das Einleiten des Gases beispielsweise durch eine perforierte Platte und eine Homogenisierung der Dispersion durch das aufsteigende Gas erfolgt. Bei einer anderen Ausführungsform wird das Mischen durch Rühren oder durch Umpumpen durchgeführt werden. Es ist erfindungsgemäß bevorzugt, dass eine Mischung durch Rühren erfolgt. Die Menge des einzuleitenden CO₂ wird nach dem pH-Wert bestimmt. Im erfindungsgemäßen Verfahren wird die Zeit zur Änderung des pH-Werts von Lieferform auf die Applikationsform beispielsweise pH 7 bis pH 9, in einem Zeitraum von 0,5 Minuten bis 20 Minuten erzielt. Das kann durch die Menge des eingeleiteten CO2 und durch die Geschwindigkeit der Homogenisierung der Klebstoffdispersion beeinflusst werden. Es ist für den Fachmann durch einfache Versuche möglich, eine geeignete Dosierung in Abhängigkeit von dem pH-Wert sicherzustellen. Insbesondere ist es zweckmäßig, wenn die vorgelegte Klebstoffmenge in einem Zeitraum zwischen 2 bis 15 Minuten auf den notwendigen pH-Wert eingestellt wird. Es ist vorteilhaft, wenn sich ein Gleichwicht des pH zu diesem Zeitpunkt eingestellt hat.

Der nach dem erfindungsgemäßen Verfahren auf den pH-Wert von 7 bis 9 eingestellte Klebstoff ist für einen Zeitraum bis zu 8 Stunden als Dispersion lagerstabil und verarbeitbar. Ohne weitere Scherung oder Erwärmung kann diese Dispersion aufgetragen werden. Das kann beispielsweise durch Düsen, Rollen, Walzen, Rakeln oder insbesondere durch Sprühapplikation geschehen. Dabei kann der Klebstoff direkt versprüht werden oder das wird durch einen zusätzlichen Gasstrom unterstützt. Während der Sprühapplikation ist es möglich, dass ein Teil des Wassers verdampft. Unmittelbar nach dem Auftreffen ergibt sich auf den Substrat eine Klebstoffschicht. Diese ist üblicherweise nicht mehr fließfähig. Diese kann unmittelbar mit einem zweiten Substrat verklebt werden. Es ist jedoch auch möglich, die so erzeugte Klebstoffschicht erst nach einer Wartezeit von bis zu 15 Minuten zu verkleben. Das Verkleben kann durch Anwendung vom leichten Druck unterstützt werden. Dabei ist es möglich, dass ein Substrat beschichtet ist, es ist jedoch auch möglich, dass beide Substratoberflächen eine entsprechende Klebstoffschicht aufweisen. Unabhängig von einer Theorie wird angenommen, dass bei dem Auftragen und Verkleben der Substrate der Klebstoff koaguliert, es bildet sich eine unmittelbare Haftung der verklebten Substrate aus.

Über den ausgewählten pH-Wert der applikationsfertigen Klebstoffdispersion und über die Menge der einleiteten CO₂ kann die offene Zeit beeinflusst werden. Wird der pH-Wert im niedrigeren Bereich gewählt beispielsweise unter 7,8 ist eine gute Verarbeitung möglich, es wird ein schneller Haftungsaufbau bei dem Verkleben der Substrate beobachtet. Wird ein pH-Wert im oberen Bereich gewählt, beispielsweise von 8,0 bis 9,0, erhöht sich die Verarbeitungszeit der Klebstoffdispersion. Dabei ist der Haftungsaufbau des verklebten Substrates etwas langsamer, die offene Zeit zur Verarbeitung und Verklebung ist größer.

Ein weiterer Gegenstand der Erfindung ist eine wässrige Klebstoffdispersion, die chlorierte Polyolefine enthält und als Kontaktklebstoff geeignet ist. Ein erfindungsgemäßer Klebstoff auf Dispersionsbasis enthält mindestens ein chloriertes Polyolefin als Bindemittel. Beispiele für solche Bindemittel sind Homo- und Copolymere des Polyethylen, Polypropylen, Polybutylen, Polyisobuten, Polyhexen, Polyocten, Polydecen und Polyoctadecen, Polystyrol; Polymere enthaltend substituierte Monomere, wie p-Methoxystyrol, Acrylonitril, Methacrylonitril, Vinylacetat, Vinylpropionat, Vinylbutyrat, Vinylbenzoat, Vinylmethylether, Isobutylen, Ethylen, Vinylchlorid, Vinylidenchlorid, Alkylacrylate, Acrylsäure und Methacrylsäure; ähnliche monoolefinische polymerisierbare Verbindungen, wie Butadien-1,3, Isopren und andere Butadien-1,3-Kohlenwasserstoffe, die Chlor als Substituenten enthalten. Diese Polymere können als gelöstes oder geschmolzenes Produkt nach einer Polymerisation einer Chlorierung unterzogen werden. Eine andere Arbeitsweise stellt jedoch geeignete Polymere durch Copolymerisation mit chlorierten Monomeren her. Bekannte Monomere dafür sind beispielsweise Vinylhalogenid, Vinylidenhalogenid, Chloropren, Styrol und monoalkenylaromatischen Alkylhalogeniden, Vinylbenzylchlorid, p-Chlorstyrol, 3,5-Dichlorstyrol, p-Trichlormethylvinyl-benzol, Vinyl-benzylchlorid-(4-chlormethyl-vinylbenzol), oder 2,3-Dihalogen-1,3-butadien. Es sind auch chlorsulfonierte Ethylenpolymere oder Chlorkautschuk geeignet.

Bevorzugt sind chlorierte Polymere mit einem Chlor-Gehalt von ca. 20 bis 75 Gew.-% geeignet, beispielsweise chloriertes Polypropylen/Polyethylen oder Polychloropren mit ca. 20 bis 50 Gew-% oder chloriertes Polyvinylchlorid mit einem Chlor-Gehalt von ca. 60 bis 75 Gew.-%. Insbesondere sind Polychloroprene geeignet. Die chlorierten Polyolefine können im Gemisch eingesetzt werden, es ist jedoch auch möglich nur ein Polymer einzusetzen. Solche chlorierten Polyolefine sind kommerziell erhältlich. Die Menge der chlorierten Polymere soll von 20 bis 50 Gew.-% bezogen auf die gesamte Klebstoffdispersion betragen, insbesondere von 25 bis 40 Gew.-%. Insbesondere sollen sie als wässrige Dispersion eingesetzt werden. Dabei liegen solche Dispersionen als alkalische Lösung vor, der pH beträgt zwischen 10 bis 13.

In den erfindungsgemäß geeigneten Klebstoffen können zusätzlich auch weitere Basispolymere enthalten sein. Beispielsweise kann es sich dabei um (Meth)acrylatcopolymere, Styrolcopolymere, Styrolacrylate oder Styrolbutadiene handeln. Solche Poly(meth)acrylate sind beispielsweise erhältlich durch Copolymerisation von ethylenisch ungesättigten Carbonsäureestern, wie Acrylsäure-, Methacrylsäure-, Crotonsäure- oder Maleinsäureester. Bevorzugt werden bekannte C₁ bis C₁₂ -Alkylester der (Meth)acrylsäure polymerisiert. Es können dabei auch funktionalisierte Monomere enthalten sein, beispielsweise OH-Gruppen oder COOH-Gruppen tragenden Monomere. Es können auch weitere copolymerisierbare Monomere enthalten sein, beispielsweise Ethylen, Styrol, substituierte Styrole. Es können so funktionalisierte oder nicht funktionalisierte Copolymere erhalten werden, die Copolymere können eine hohe Glasübergangstemperatur (T_{g}) oder eine niedrige T_{g} aufweisen.

Eine andere Klasse von Basispolymeren sind Styrolcopolymerisate. Es handelt sich dabei um Copolymerisate von Styrol und seinen Derivaten. Es können auch zusätzlich Struktureinheiten enthalten sein, wie Butadien, Isopren, Ethylen, Propylen und/oder Acrylat-Strukturen. Diese weiteren Polymere sind auch als Dispersion herstellbar, gegebenenfalls können diese durch bekannte Tenside stabilisiert werden. Solche Acrylatpolymere oder Styrolcopolymere sind als Dispersion, als Lösung oder lösemitelfrei kommerziell erhältlich. Die Menge der zusätzlichen Basispolymere kann zwischen 5 bis 35 Gew.% bezogen auf die Klebstoffdispersion betragen.

Ein weiterer Bestandteil geeigneter Klebstoffe sind Weichmacher. Diese Weichmacher werden vorzugsweise zum Einstellen des Fließverhaltens oder der Flexibilität der Klebstoffschicht verwendet. Geeignete Weichmacher sind beispielsweise medizinische Weißöle, naphtenische Mineralöle, Polypropylen-, Polybuten-, Polyisopren-Oligomere, hydrierte Polyisopren- und/oder Polybutadien-Oligomere, Benzoatester, Phthalate oder Adipate. Auch hydrierte Weichmacher, beispielsweise paraffinischen Kohlenwasserstofföle, oder Polypropylenglykol, Polybutylenglykol, sowie Polymethylenglykol sind geeignet, ebenso können Alkylmonoamine und Fettsäuren eingesetzt werden. Bevorzugt werden Ester als Weichmacher eingesetzt, beispielsweise Phthalat-, Benzoat- oder Adipatester. Die Weichmacher sind im allgemeinen in einer Konzentration von 0 - 25 Gew.%, vorzugsweise von 1 - 15 Gew.% enthalten.

Weiterhin kann die Klebstoffdispersion als Zusatzstoff noch 0,01 bis 5 Gew.%, bezogen auf die Klebstoffdispersion insgesamt, mindestens eines grenzflächenaktiven Stoffs enthalten. Darunter werden Stoffe verstanden, die die Grenzflächenspannung zu Wasser herabsetzen, wie Entschäumer, Tenside, Benetzungsmittel. Sie enthalten in der Regel hydrophile und hydrophobe, insbesondere lipophile Gruppen. Es können anionische, nichtionische oder ampholytische Tenside, oder Gemische aus zwei oder mehr davon, enthalten sein.

Beispiele für geeignete anionische Tenside sind Alkylsulfate, Alkyl- , Alkylarylether sulfate, wie Alkylphenolether-Sulfate, Fettalkohol-, Fettalkoholether-, Sulfonate, insbesondere Alkylsulfonate, Alkylarylsulfonate, Tauride, Ester und Halbester der Sulfobernsteinsäure, die gegebenenfalls ethoxyliert sein können, Alkali- und Ammoniumsalze von Carbonsäuren, beispielsweise von Fettsäuren, Phosphorsäurepartialester und deren Alkali- und Ammoniumsalze.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze oder Alkylimidazoliumbetaine.

Beispiele für nichtionische Tenside sind Alkylpolyglykolether, Alkylarylpolyglykolether, Fettalkoholpolyglykolether, Fettalkohol-EO/PO-Addukte und Alkylphenol-EO/PO-Addukte, Ethylenoxid/Propylenoxid (EO/PO)-Blockcopolymere, vorzugsweise solche mit etwa 8 bis etwa 50 EO- bzw. PO-Einheiten, Additionsprodukte von Alkylaminen, Fett- und Harzsäuren, Alkylpolyglykoside mit linearen oder verzweigten, gesättigten oder ungesättigten Alkylresten mit im Mittel 8 bis etwa 24 C-Atomen und einem Oligoglykosidrest, Naturstoffe und deren Derivate wie Lecithin, Lanolin oder Sarkosin, polare Gruppen enthaltende lineare Organo(poly)siloxane, insbesondere solche mit Alkoxygruppen mit bis zu 10 C-Atomen und bis zu etwa 50 EO- oder PO-Gruppen.

Ein wichtiger Bestandteil eines erfindungsgemäß geeigneten Klebstoffs sind Mittel zum Einstellen des pH-Werts. Die Dispersionen der chlorierten Polyolefine sind üblicherweise in alkalischem Medium stabil. Dabei soll der pH-Wert zwischen 10 bis 13 betragen. Das kann durch Auswahl und Menge der Neutralisationsmittel sichergestellt werden. Es könne dabei Basen, wie Alkalihydroxide oder Ammoniumhydroxid, Carbonate oder tertiäre organische Amine enthalten sein, beispielsweise Na₂CO₃, K₂CO₃, NaHCO₃, KHCO₃, Na₃PO₄, Na₂HPO₄, CaCO₃, Ca(OH)₂, NaOH oder KOH, DBU, DBN oder Borax. Es werden bevorzugt Mischungen eingesetzt, die den oben angegebenen pH einstellen. Es bildet eine Pufferlösung, die das Klebstoffsystem stabilisiert.

Darüber hinaus können dem Klebstoff übliche Hilfs- und Zusatzstoffe beigefügt werden. Dabei kann es sich um Stabilisatoren, Pigmente oder Haftvermittler handeln. Sie werden üblicherweise in Mengen bis zu 5 Gew.-%, vorzugsweise in Mengen von etwa 0,1 bis 3,0 Gew.-% der Klebstoffdispersion beigefügt. Der Gehalt des Dispersion an organischen Lösemittel soll gering sein, weniger als 3 Gew.%. Insbesondere werden keine Lösemittel zugesetzt. Der Klebstoff ist lösemittelfrei, es sind nur Verunreinigungen aus den Ausgangsmaterialien vorhanden.

Der Klebstoff liegt in Form einer Dispersion vor. Dabei können die Ausgangsmaterialien, beispielsweise die Dispersion der chlorierten Polyolefine, insbesondere des Chloroprens, sowie der weiteren Bindemittel, beispielsweise der Polyacrylate oder Styrolcopolymeren, bereits in Form einer wässrigen Dispersion vorliegen. Diese Dispersionen können gemischt werden, dabei ist darauf zu achten, dass der pH-Wert so eingestellt wird, dass eine stabile Mischung erhalten wird, das ist, wie oben angegeben, im alkalischen pH-Bereich der Fall. Dazu können die weiteren Additive zugemischt und dispergiert werden.

Der Klebstoff hat eine Viskosität (gemessen bei 25°C, nach Brookfield, EN ISO 2555) von ca. 200 bis 5000 mPas, insbesondere soll die Viskosität zwischen 200 und 2000 mPas liegen. Die Bestandteile der Dispersion sollen so ausgewählt werden, dass der Gesamtfestkörper zwischen 35 und 80 Gew.-% beträgt, insbesondere zwischen 45 und 65 % (Festkörperbestimmung gemäß DIN 53189, 105°C).

Die so erhaltene Klebstoffdispersion ist bei einem pH über 10 lagerstabil. Wird bei der Dispersion der pH-Wert verringert, geht die Dispersion in eine instabile Phase über. Bei einer noch weiteren Absenkung des pH-Werts fallen die Feststoffe aus. Der Klebstoff koaguliert und kann nicht mehr aufgetragen werden. Als erfindungsgemäßer Klebstoff soll insbesondere auch eine Klebstoffdispersion verstanden werden, die als instabile Form einen mit CO₂ eingestellten niedrigen pH-Wert zwischen 7,0 und 9,0 aufweist.

Eine erfindungsgemäße Form des wässrigen Klebstoffs besteht aus 20 bis 50 Gew.-% (Festkörper) von chlorierten Polyolefinen, 5 bis 35 Gew.-% weitere Polymere, 0 bis 25 Gew.-% Weichmacher sowie 0,01 bis 5 Gew.-% Tenside sowie Neutralisationsmittel und Wasser, wobei der Gesamtfestkörper zwischen 40 bis 80 % betragen soll. Eine bevorzugte Ausführungsform enthält dabei zusätzlich gelöstes CO₂ in einer Menge, dass der pH-Wert zwischen 7,0 und 9,0 liegt. Insbesondere soll der Klebstoff 25 bis 40 Gew.-% Polychloropren enthalten, 5 bis 35 Gew.-% Poly(meth)acrylate und/oder Styrolcopolymere, 0,1 bis 15 Gew.-% Weichmacher auf Esterbasis, sowie 0,1 bis 5 Gew.-% anionische oder nichtionische Tenside sowie Neutralisationsmittel und Wasser, wobei der Gesamtfestkörper zwischen 45 bis 65 % betragen soll. Insbesondere kann ein erfindungsgemäßer Klebstoff in dem Verfahren gemäß der Erfindung eingesetzt werden.

Ein weiterer Gegenstand der vorliegenden Erfindung ist eine Vorrichtung zur Bereitstellung und Durchführung eines erfindungsgemäßen Verfahrens. Ein wesentlicher Bestandteil der Vorrichtung ist ein Rührkessel. Dieser wird so gewählt, dass er eine glatte, leicht zu reinigende Innenoberfläche aufweist. Weiterhin soll die Form so ausgebildet sein, dass kein Tot-Volumen beim Rühren besteht. Das Reaktionsgefäß soll eine entsprechende Rühreinheit aufweisen, beispielsweise einen Flügelrührer. Über einen Zulauf und über einen Auslauf kann das entsprechende Reaktionsgefäß mit der lagerstabilen Klebstoffdispersion befüllt werden.

Weiterhin ist dieses Reaktionsgefäß mit einer pH-Meßelektrode und einer Einleitungsvorrichtung für Gase versehen. Die Elektrode ist so angeordnet, dass sie bei der vorgesehen Füllhöhe für die wässrige Klebstoffdispersion in diese eintaucht und eine kontinuierliche Messung ermöglicht. Der Gaseinlass ist üblicherweise so angeordnet, dass er sich im unteren Teil des Rührkessels befindet. Das einströmende Gas, in diesem Falle das CO₂, wird so in die Dispersion geleitet und durch Rühren mit der Dispersion homogenisiert.

Ein gegebenenfalls vorhandenes Bauteil der Vorrichtung ist ein Überdruckventil. Dieses soll so angeordnet sein, dass es sich oberhalb des geplanten Flüssigkeitsspiegels befindet. Es soll sicherstellen, dass für den Fall einer zu hohen Einleitung von CO₂ in die Klebstoffdispersion, sich kein Überdruck in dem Gefäß ausbildet und überschüssiges CO₂ entweichen kann.

Weiterhin soll die erfindungsgemäße Vorrichtung eine Regeleinheit enthalten. Diese misst den pH-Wert der Lösung im Reaktionsgefäß. Diese hat ein Stellglied, bei dem ein vorgegebener pH-Wert einzustellen ist. Es wird die Zugabe des CO₂ so lange geregelt, wie der Ist-Wert vom Soll-Wert unterschiedlich ist. Bei Erreichen des Soll-Wertes kann entweder die CO₂-Zufuhr abgestellt werden. Eine andere Ausführungsform der Erfindung enthält ein Signalgerät. Dieses wird beim Erreichen des Sollwertes angesprochen und erzeugt für den Benutzer deutlich erkennbar ein Warnsignal, beispielsweise einen Signalton.

Gemäß der Arbeitsweise der vorliegenden Erfindung wird in eine Mischungsvorrichtung eine definierte Menge einer lagerstabilen Klebstoffdispersion eingebracht. Danach wird die Einleitung von CO₂ begonnen, dabei wird der pH-Wert laufend überwacht. Bei Erreichen des vorher eingestellten Soll-pH-Werts der Dispersion wird die CO₂-Zufuhr reduziert oder abgestellt. Weiterhin wird ein Alarmsignal generiert, dass dem Anwender auf das Erreichen des Zielwertes hinweist. Gemäß einer Arbeitsweise kann danach der Klebstoff in dem Reaktionsgefäß als Lagergefäß verbleiben. Aus dem Auslass wird entsprechend der jeweils zu applizierenden Menge eine Teilmenge des eingefüllten Klebstoffs entnommen. Diese entnommene Klebstoffmenge kann beispielsweise durch ein Sprühaggregat auf ein Substrat aufgetragen werden. Eine andere Arbeitsweise entleert das Reaktionsgefäß von dem verarbeitungsfertigen Klebstoff.
Durch die erfindungsgemäße Vorrichtung ist eine einfache Durchführung des erfindungsgemäßen Verfahrens möglich.

Das erfindungsgemäße Verfahren kann für verschiedene Substrate angewendet werden. Beispielsweise ist es möglich feste, starre oder flexible Substrate miteinander zu verkleben. Diese können aus verschiedenen Materialien hergestellt sein, es kann sich dabei um natürliche Werkstoffe wie Holz, MDF, Gewebe aus natürlichen Fasern, Glas, Leder usw. handeln. Es können jedoch auch Substrate auf Basis von Polymeren oder Metall verklebt werden. Es kann sich um feste Substrate handeln, es können jedoch auch flexible Substrate wie beispielsweise Folien oder Schaumstoffe handeln. Dabei können gleiche Substrate miteinander verklebt werden, es können auch unterschiedliche Substrate miteinander verklebt werden. Es ist bei der erfindungsgemäßen Arbeitsweise vorteilhaft, wenn wenigstens ein Substrat saugfähig ist. Die Klebstoffschicht kann auf ein Substrat aufgetragen werden, es können aber auch beide zu verklebenden Flächen mit dem Klebstoff beschichtet werden. Die Menge ist vom Fachmann angepasst an die unterschiedlichen Substrate auszuwählen.

Der erfindungsgemäß einsetzbare Klebstoff hat den Vorteil, dass er im Wesentlichen frei von Lösemitteln ist. Dadurch wird eine Belastung der Arbeitsumgebung mit organischen Lösemitteln vermieden. Weiterhin hat er den Vorteil, dass keine zusätzliche chemische Vernetzung erfolgen muss, damit ist ein schneller Haftungsaufbau sichergestellt. Weiterhin ist der Klebstoff in seiner Lieferform über längere Zeiträume zu lagern, ohne seine Eigenschaften zu verlieren. Durch die genau zu bemessende Menge an CO₂ werden reproduzierbare Eigenschaften des Klebstoffs und der Klebstoffschicht erhalten, sodass eine gleichmäßige Verarbeitung ermöglicht wird.

Das erfindungsgemäße Verfahren hat den Vorteil, dass vor Anwendung die Klebstoffe mit CO₂ so versetzt werden, dass der pH-Wert auf einen vorbestimmbaren Wert abgesenkt wird. Dabei ist durch das Verfahren sichergestellt, dass auch bei einer längeren Verarbeitungszeit eine reproduzierbare, gleichmäßig schnelle Verklebung mit dem Klebstoff möglich ist. Durch die Homogenisierung des Gases in der vorgelegten Dispersionsmenge wird eine gleichmäßige Absenkung des pH-Werts sichergestellt. Durch die Steuerung der Menge des einzuarbeitenden CO₂ durch den pH-Wert der Lösung wird erreicht, dass auch bei unterschiedlichen Chargen des Klebstoffs sowie bei unterschiedlichen Verarbeitungsbedingungen, wie andere Mischaggregate, andere Mischtemperatur oder unterschiedliche Alterung, jeweils eine Klebstoffdispersion hergestellt wird, die eine reproduzierbare Verarbeitung ermöglicht. Damit können Testverklebungen zur Überprüfung des hergestellten Klebstoffs vermieden werden, es ist eine automatisierte Arbeitsweise möglich.
Ein entsprechender Klebstoff kann als nass aufgetragener Kontaktklebstoff eingesetzt werden. Dabei erfolgt eine Verklebung einer Klebstoffschicht, solange dieser noch eine Restfeuchtigkeit aufweist.

### Beispiel 1:

Es wird eine Mischung hergestellt aus

**Polychloroprendispersion**

| | |
|---|---|
| (Dispercoll C74 und C84, 1:6, Festkörper ca. 55%) | 67 % |
| Polyacrylatdispersion (Acronal S 400, Festkörper ca. 56%) | 9 % |
| Styrolbutadiendispersion (Intex 131, Festkörper ca. 65 %) | 17,8 % |
| Weichmacher (Benzylester) | 1,8 % |
| Natriumlaurylsulfat (10 %) | 2,7 % |
| Alterungsschutzmittel | 1,3 % |
| Pufferlösung (aus Glycin, Borax, Natriumlauge, Ammoniumhydrogencarbonat) | ca. 0,5 % |

Die Bestandteile werden in einem schnelllaufenden Rührsystem gemischt. Es ergibt sich ein lagerstabiler Klebstoff mit einem Festkörper von ca. 55 Gew.-%. Der pH beträgt ca. 12. Die Viskosität des Klebstoffs beträgt ca. 300 mPas.

In einem Gefäß mit einem Flügelrührer werden 2500 g der Klebstoffmischung vorgelegt. Durch eine Unterniveaueinleitung wird CO₂ in die Lösung eingeleitet, dabei wird die Mischung unter Rühren homogenisiert. Das Mischgefäß ist mit einer pH-Elektrode versehen, die den pH-Wert unmittelbar misst. Die Menge des CO2 wird so dosiert, dass nach 10 Minuten ein pH-Wert von 7,6 erreicht wird.

Der verarbeitungsfertige Klebstoff zeigt eine Lagerstabilität von mehr als 5 Stunden bei Raumtemperatur.

Die Viskosität des Klebstoffs mit aufgenommenen CO₂ beträgt 300 mPas.
Der Klebstoff kann durch Sprühapplikation auf Substrate aufgebracht werden mit einer Schichtstärke von 200 g/m².

Als Substrate werden jeweils Prüfkörper beschichtet (5 x 10 cm):
Aluminium, MDF, Weichschaumstoff, PVC, Hartschaum, Massivholz Nach dem Klebstoffauftrag ruhen die Prüfkörper 2 min. und dann mit einem gleichen Substrat (unbeschichtet) verklebt unter kurzem Andrücken.

Es wird eine analoge Verklebung hergestellt, wobei jeweils ein beschichtetes Holz-Substrat mit den anderen Substraten verklebt werden.

Die Anfangs- und Endhaftung ist gut.

Ein Bruch der Verklebung ergibt einen Materialbruch in einem Substrat.

Es wird die CO₂-Menge des erfindungsgemäßen Versuchs bestimmt. Diese Menge wird in eine gleiche Menge Dispersion eingeleitet.
Vergleich 1 : ohne Rührer
Vergleich 2 : bei 40°C, mit Rührer
Vergleich 3 : bei eine 6 Monate gelagerten Dispersion

Der pH-Wert der Klebstoffdispersion wird gemessen. Die Messwerte liegen zwischen 7,2 bis 8,0. Verklebungen zeigen ein unterschiedliches Klebeverhalten.

## Patentansprüche

1. Verfahren zum Herstellen einer Klebstoffschicht, wobei eine wässrige Klebstoffdispersion enthaltend chlorierte Polyolefine und weitere Zusatzstoffe mit einem pH von 10 bis 13 bereitgestellt wird, dieser Klebstoff durch Einleiten von CO₂ auf einen pH unterhalb 9,0 eingestellt wird, danach eine Klebstoffschicht aufgetragen wird, **dadurch gekennzeichnet, dass** die Menge des einzubringenden CO₂ durch Messen des pH-Wertes der Dispersion bestimmt und geregelt wird, wobei das CO₂ so eingeleitet wird, dass der gewünschte pH in einer Mischzeit von 0,5 Minuten bis 20 Minuten eingestellt wird.

2. Verfahren nach Anspruch 1, **dadurch gekennzeichnet, dass** die Dispersion beim Einleiten des CO₂ homogenisiert wird.

3. Verfahren nach einem der Ansprüche 1 bis 2, **dadurch gekennzeichnet, dass** das CO₂ so eingeleitet wird, dass der gewünschte pH in einer Mischzeit von 2 bis 15 Minuten eingestellt wird.

4. Verfahren nach einem der Ansprüche 1 bis 3, **dadurch gekennzeichnet, dass** die Dispersion eine Viskosität von 200 bis 5000 mPas (EN ISO 2555, bei 25 °C) aufweist.

5. Verfahren nach einem der Ansprüche 1 bis 4, **dadurch gekennzeichnet, dass** die Dispersion auf einen pH von 7,0 bis 9,0 eingestellt wird und einen Festkörper von 40 bis 80 % aufweist.

6. Verfahren nach einer der Ansprüche 1 bis 5, **dadurch gekennzeichnet, dass** die Klebstoffdispersion frei von organischen Lösemitteln ist.

7. Verfahren nach einem der Ansprüche 1 bis 6, **dadurch gekennzeichnet, dass** der Klebstoff durch Sprühen aufgetragen wird.

8. Verfahren nach einem der Ansprüche 1 bis 7, **dadurch gekennzeichnet, dass** die beschichtete Substratfläche unter Druck mit einer zweiten Substratfläche verklebt wird, wobei insbesondere ein Substrat eine Wasser absorbierende Oberfläche aufweist.

9. Verfahren nach einem der Ansprüche 1 bis 8, **dadurch gekennzeichnet, dass** die beschichtete Substratfläche vor dem Verkleben 1 bis 15 min. gelagert wird.

10. Verfahren nach einem der Ansprüche 1 bis 9, **dadurch gekennzeichnet, dass** ein wässriger Klebstoff eingesetzt wird, enthaltend 20 - 50 Gew.-% chlorierte Polyolefine, 5 - 35 Gew.-% weitere Polymere, 0 - 25 Gew.-% Weichmacher sowie 0,01 - 5 Gew.-% Tenside sowie Neutralisationsmittel und Wasser, wobei der Gesamtfestkörper zwischen 40 bis 80 % betragen soll, und der pH-Wert des Klebstoffes durch gasförmiges CO₂ auf einen pH-Wert von 7,0 bis 9,0 eingestellt ist.

11. Verwendung einer Klebstoffschicht hergestellt nach einem der Ansprüche 1 bis 10 zum Verkleben von harten, weichen oder flexiblen Substraten.

12. Verwendung nach Anspruch 11 zum Verkleben von Substraten aus Folien, Leder, Stoffen, Holz, Holzwerkstoffen, Metall, Hartschaum, Weichschaum, Glas , Keramik oder anderen Polymeren.

13. Verwendung nach Anspruch 11 und 12 zum Verkleben von saugfähigen Substraten.

14. Verwendung nach Anspruch 12 und 13 als feuchter Kontaktklebstoff.

## Claims

1. A method for producing an adhesive layer, an aqueous adhesive dispersion containing chlorinated polyolefins and further additives having a pH of from 10 to 13 being provided, said adhesive being adjusted to a pH of less than 9.0 by introducing CO₂, thereafter an adhesive layer being applied, **characterized in that** the amount of CO₂ to be introduced is determined and controlled by measuring the pH of the dispersion, the CO₂ being introduced such that the desired pH is adjusted in a mixing time of from 0.5 minutes to 20 minutes.

2. The method according to claim 1, **characterized in that** the dispersion is homogenized when the CO₂ is introduced.

3. The method according to one of claims 1 to 2, **characterized in that** the CO₂ is introduced such that the desired pH is adjusted in a mixing time of from 2 to 15 minutes.

4. The method according to one of claims 1 to 3, **characterized in that** the dispersion has a viscosity of from 200 to 5000 mPas (EN ISO 2555, at 25 °C).

5. The method according to one of claims 1 to 4, **characterized in that** the dispersion is adjusted to a pH of from 7.0 to 9.0 and has a solids content of from 40 to 80%.

6. The method according to one of claims 1 to 5, **characterized in that** the adhesive dispersion is free of organic solvents.

7. The method according to one of claims 1 to 6, **characterized in that** the adhesive is applied by spraying.

8. The method according to one of claims 1 to 7, **characterized in that** the coated substrate surface is bonded to a second substrate surface under pressure, one substrate having in particular a water-absorbing surface.

9. The method according to one of claims 1 to 8, **characterized in that** the coated substrate surface is mounted from 1 to 15 minutes before bonding.

10. The method according to one of claims 1 to 9, **characterized in that** an aqueous adhesive is used, containing 20-50 wt.% chlorinated polyolefins, 5-35 wt.% further polymers, 0-25 wt.% plasticizers and 0.01-5 wt.% surfactants, as well as neutralization agent and water, it being intended for the total solids content to be between 40 and 80%, and the pH of the adhesive being adjusted to a pH of from 7.0 to 9.0 by means of gaseous CO₂.

11. The use of an adhesive layer produced according to one of claims 1 to 10 for bonding hard, soft or flexible substrates.

12. The use according to claim 11 for bonding substrates made of film, leather, fabrics, wood, wood materials, metal, rigid foam, flexible foam, glass, ceramics or other polymers.

13. The use according to claims 11 and 12 for bonding absorbent substrates.

14. The use according to claims 12 and 13 as a moist contact adhesive.

## Revendications

1. Procédé de fabrication d'une couche d'adhésif, où on prépare une dispersion aqueuse d'adhésif contenant des polyoléfines chlorées et d'autres additifs avec un pH de 10 à 13, on porte cet adhésif à un pH inférieur à 9,0 par introduction de CO₂, puis on applique une couche d'adhésif, **caractérisé en ce que** la quantité de CO₂ à introduire est déterminée et régulée par la mesure du pH de la dispersion, le CO₂ étant introduit de façon à porter le pH à la valeur désirée en une durée de mélange de 0,5 à 20 minutes.

2. Procédé selon la revendication 1, **caractérisé en ce que** la dispersion est homogénéisée pendant l'introduction du CO₂.

3. Procédé selon une des revendications 1 à 2, **caractérisé en ce que** le CO₂ est introduit de façon à porter le pH à la valeur désirée en une durée de mélange de 2 à 15 minutes.

4. Procédé selon une des revendications 1 à 3, **caractérisé en ce que** la dispersion présente une viscosité de 200 à 5 000 mPas (EN ISO 2555 à 25°C).

5. Procédé selon une des revendications 1 à 4, **caractérisé en ce que** la dispersion est fixée à un pH de 7,0 à 9,0 et contient un solide à hauteur de 40 à 80 %.

6. Procédé selon une des revendications 1 à 5, **caractérisé en ce que** la dispersion d'adhésif ne contient pas de solvant organique.

7. Procédé selon une des revendications 1 à 6, **caractérisé en ce qu'**on applique l'adhésif par pulvérisation.

8. Procédé selon une des revendications 1 à 7, **caractérisé en ce que** la surface de substrat recouverte est encollée sous pression avec une deuxième surface de substrat, un substrat présentant en particulier une surface qui absorbe l'eau.

9. Procédé selon une des revendications 1 à 8, **caractérisé en ce que** la surface de substrat recouverte est conservée 1 à 15 minutes avant l'encollage.

10. Procédé selon une des revendications 1 à 9, **caractérisé en ce qu'**on utilise un adhésif aqueux contenant 20 à 50 % en poids de polyoléfine chlorée, 5 à 35 % en poids d'autres polymères, 0 à 25 % en poids de plastifiant ainsi que 0,01 à 5 % en poids de tensioactifs, ainsi que des neutralisants et de l'eau, la teneur totale en solides devant être de 40 à 80 %, et le pH de l'adhésif étant fixé à une valeur de 7,0 à 9,0 par du CO₂ gazeux.

11. Utilisation d'une couche d'adhésif fabriquée selon une des revendications 1 à 10 pour encoller des substrats durs, mous ou souples.

12. Utilisation selon la revendication 11 pour encoller des substrats de films, cuir, tissus, bois, matériaux à base de bois, métal, mousse dure, mousse molle, verre, céramique ou autres polymères.

13. Utilisation selon la revendication 11 et 12 pour encoller des substrats absorbants.

14. Utilisation selon la revendication 12 et 13 comme adhésif de contact humide.
